Europäisches Patentamt

European Patent Office

Office européen des brevets

(11) Numéro de publication: **0 272 172 B1**

(19)

(12) **FASCICULE DE BREVET EUROPEEN**

(45) Date de publication de fascicule du brevet: **21.10.92**  (51) Int. Cl.⁵: **G05B 19/04**

(21) Numéro de dépôt: **87402534.9**

(22) Date de dépôt: **10.11.87**

(54) **Circuit de gestion d'entrées notamment pour automate programmable.**

(30) Priorité: **25.11.86 FR 8616855**

(43) Date de publication de la demande:
**22.06.88 Bulletin 88/25**

(45) Mention de la délivrance du brevet:
**21.10.92 Bulletin 92/43**

(84) Etats contractants désignés:
**BE DE ES GB IT NL SE**

(56) Documents cités:
**EP-A- 0 105 667**
**US-A- 4 360 913**
**US-A- 4 570 215**

(73) Titulaire: **TELEMECANIOUE**
**43-45 Boulevard Franklin Roosevelt**
**F-92500 Rueil-Malmaison(FR)**

(72) Inventeur: **Pergent, Jacky**
**Rue de la Vésubie**
**Le Planet F-06510 Carros Le Neuf(FR)**
Inventeur: **Gohl, Pierre**
**Chemin de l'Escours**
**F-06480 La Colle Sur Loup(FR)**
Inventeur: **Lachenal , Jean-Louis**
**2, rue Césanne**
**Garbejaire F-06560 Valbonne(FR)**

(74) Mandataire: **Marquer, Francis et al**
**Cabinet Moutard 35, Avenue Victor Hugo**
**F-78960 Voisins le Bretonneux(FR)**

# Description

La présente invention concerne un circuit de gestion d'entrées, ou le cas échéant de gestion d'entrées-sorties, pour un système de commande de processus en milieu industriel ou tertiaire tel qu'un automate programmable.

Comme on le sait, les automates programmables comprennent des circuits d'entrée et de sortie gérés par une unité centrale de traitement munie d'un processeur et de mémoires associées, notamment d'une mémoire-image d'entrées-sorties, ainsi qu'un bus de données assurant la liaison entre les circuits d'entrée et de sortie et l'unité centrale ; en particulier, les circuits d'entrée comportent une pluralité de voies parallèles d'entrée susceptibles d'être reliées à des capteurs respectifs, l'état des voies d'entrée étant cycliquement scruté par l'unité centrale.

Les circuits d'entrée comprennent des composants rapportés et interconnectés sur une carte dont la surface doit être aussi faible que possible. De plus, les circuits d'entrée sont directement soumis aux parasites et bruits affectant les bornes et conducteurs de connexion avec les capteurs.

On utilise généralement dans le circuit d'entrée des optocoupleurs associés aux voies d'entrée afin d'assurer une transmission isolée des signaux provenant des capteurs. Tel est notamment le cas dans le circuit d'entrée/sortie décrit dans le brevet US A 4 360 913 qui permet de relier, grâce à des multiplexeurs, un nombre déterminé de voies d'entrée et de sortie à un bus parallèle de huit bits.

Il s'avère que les circuits de ce genre présentent l'inconvénient de nécessiter un optocoupleur par voie d'entrée. Ces optocoupleurs occupent donc sur la carte d'entrée une place importante. En outre, divers inconvénients résultent de l'emploi d'optocoupleurs : leur phototransistor risque en effet de se saturer en cas de perturbation violente due à un parasite de mode commun ; de plus, la dispersion et le manque de fidélité dans les caractéristiques des optocoupleurs font que le temps de blocage de ceux-ci est mal connu et de plus varie dans le temps.

L'invention a notamment pour but d'éviter ces inconvénients dus à l'emploi d'optocoupleurs pour chacune des voies d'entrée sans altérer le comportement du système de commande de processus aux perturbations, et cela au moyen d'une architecture d'entrée peu encombrante et performante quant à la sécurité d'acquisition des signaux d'entrée.

L'invention a aussi pour but de permettre de vérifier simplement la tension des capteurs.

Elle propose un circuit de gestion d'entrées pour un système de commande de processus tel qu'un automate programmable, ce système comprenant :

- une unité centrale munie d'un processeur et de mémoires, notamment d'une mémoire-image d'entrées-sorties,
- un bus de données et un bus de signaux de service assurant la liaison entre le circuit de gestion et l'unité centrale,

le circuit de gestion comportant une pluralité de voies parallèles d'entrée susceptibles d'être reliées à des capteurs respectifs et dont l'état est cycliquement scruté par l'unité centrale.

Selon l'invention, ce circuit est caractérisé en ce qu'il comporte :

- un organe sérialiseur muni d'entrées parallèles reliées aux voies respectives d'entrée par l'intermédiaire d'organes respectifs de filtrage et de seuil, et muni d'une sortie série susceptible de transmettre des mots comprenant des bits successifs correspondant aux signaux appliqués aux voies d'entrée,
- une liaison série reliant ladite sortie série à une unité de gestion d'entrées accouplable au processeur de l'unité centrale pour des échanges avec la mémoire-image d'entrées-sorties,
- un organe d'isolement tel qu'un optocoupleur, interposé sur la liaison série pour assurer la transmission isolée de signaux d'entrée entre l'organe sérialiseur et l'unité de gestion d'entrées, et
- un filtre disposé sur la liaison série en aval de l'optocoupleur,

l'unité de gestion d'entrées comprenant un organe de désérialisation dont l'entrée série est reliée à la sortie du filtre et dont la sortie parallèle est connectée au bus de données.

Il en résulte une simplification des interconnexions et un faible encombrement de la carte portant le circuit de gestion d'entrées puisque cette carte n'est plus dotée - pour un ensemble donné de voies d'entrée - que d'un nombre réduit d'optocoupleurs, à savoir un seul optocoupleur de transmission de données et quelques optocoupleurs de transmission de signaux d'horloge ou d'adressage. De plus, le filtrage effectué sur chaque voie devant l'optocoupleur permet de transmettre des signaux de données déparasités.

De préférence, on prévoit d'incorporer à chaque mot transmis par la liaison série en sus d'un bit de parité des bits de valeur fixe pour contrôler l'intégrité de cette liaison et un bit de contrôle de la tension des capteurs.

D'autres caractéristiques et avantages de l'invention ressortiront de la description faite ci-après d'un exemple de réalisation non limitatif, en regard des dessins annexés.

La figure 1 représente un schéma synoptique d'un circuit de gestion d'entrées-sorties pour automate programmable selon l'invention ;

La figure 2 est un schéma partiel d'un mode de réalisation préférentiel du circuit de gestion d'entrées-sorties de la figure 1 ;

La figure 3 est un schéma synoptique de l'unité de gestion d'entrées-sorties du circuit de la figure 1 ;

La figure 4 montre plus en détail une partie de la logique de contrôle d'échange de l'unité de gestion d'entrées-sorties de la figure 3 ;

La figure 5 est un schéma du système d'horloge propre à l'unité de gestion ;

La figure 6 illustre par un chronogramme certains des signaux générés par le système d'horloge et un exemple de trame d'entrée cadencée par ces signaux ;

La figure 7 représente schématiquement une variante d'exécution de l'organe sérialiseur utilisable dans le circuit de gestion d'entrées-sorties de la figure 1.

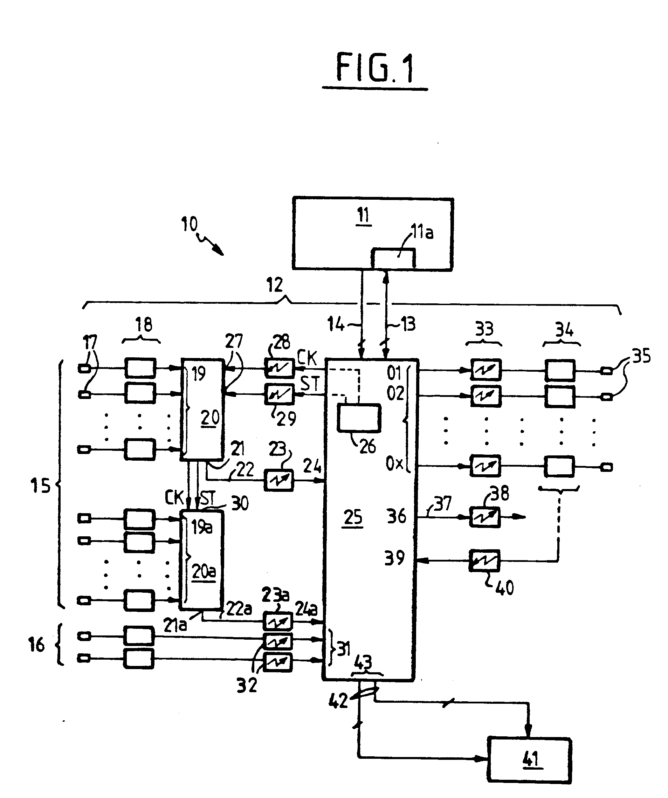

L'automate programmable 10 illustré par la figure 1 comporte une unité centrale de traitement 11 constituée d'un microprocesseur, d'une logique de traitement et de mémoires associées, notamment d'une mémoire-image d'entrées-sorties 11a. Il comporte aussi une alimentation non représentée et un circuit ou plusieurs circuits de gestion d'entrées-sorties 12 ; un tel circuit va être à présent décrit.

L'unité centrale 11 est reliée à un ou plusieurs circuits 12 par un bus de données 13, par exemple à huit bits, et par un bus de signaux de service 14.

Chaque circuit de gestion d'entrées-sorties 12 comprend un certain nombre de voies parallèles d'entrée normales 15 et deux voies parallèles d'entrée événementielles prioritaires 16. Chaque voie d'entrée est susceptible d'être reliée à un capteur via une borne d'entrée 17 et présente un organe de filtrage analogique et de seuil 18.

Les voies 15 sont connectées aux entrées parallèles 19 d'un organe sérialiseur 20. Celui-ci est constitué dans le présent mode de réalisation par un registre parallèle-série.

Un autre registre parallèle-série 20a est ajouté pour doubler le nombre des voies normales d'entrée. La capacité d'acquisition d'entrées peut encore être augmentée par l'adjonction d'autres registres parallèle-série.

Le registre parallèle-série 20 présente une sortie série 21 reliée, par l'intermédiaire d'une liaison série 22 comprenant un optocoupleur 23 ou autre organe analogue de transmission isolée, à l'entrée série 24 d'une unité 25 de gestion d'entrées-sorties munie d'un système d'horloge 26 autonome par rapport au système d'horloge de l'unité centrale 11. L'acquisition des entrées par les registres 20 et 20a peut ainsi s'effectuer simultanément et indépendamment de la vitesse d'acquisition et de traitement de l'unité centrale.

Comme on le verra plus en détail par la suite, le système d'horloge 26 délivre un certain nombre de signaux, notamment un signal d'horloge discontinu CK et un signal de scrutation ST. Les signaux CK et ST cadencent respectivement les bits et les mots à acheminer par la liaison série 22. Les signaux CK et ST sont transmis de l'unité de gestion 25 à des entrées 27 du registre parallèle-série 20 via des lignes dotées d'optocoupleurs respectifs 28, 29.

En variante, le système d'horloge 26 peut délivrer un signal CK' continu pour cadencer les bits de la liaison série et un signal P/S parallèle/série pour déterminer le chargement parallèle ou le glissement série du registre 20 ; les signaux CK' et P/S étant là encore transmis de l'unité 25 au registre 20 par deux lignes dotées d'optocoupleurs respectifs.

De même que le registre 20, le registre parallèle-série 20a présente, d'une part, des entrées parallèles 19a reliées aux voies 15 via des organes de filtrage analogique et de seuil 18, d'autre part, une sortie série 21a reliée via une liaison série 22a munie d'un optocoupleur 23a à une deuxième entrée série 24a de l'unité de gestion 25. Des entrées 30 du registre 20a reçoivent les signaux CK et ST indirectement via le registre 20. Il convient de constater que, lorsque le circuit de gestion d'entrées selon l'invention comprend plusieurs registres parallèle-série 20, 20a, 20b, 20c,..., il suffit de prévoir autant d'optocoupleurs de liaison série 23 que de registres tout en se satisfaisant d'un ou deux optocoupleurs d'horloge et/ou de commande 28, 29.

L'unité de gestion 25 présente de plus des entrées parallèles 31 reliées chacune via un organe de filtrage et de seuil 18 et un optocoupleur 32 aux entrées rapides prioritaires 16. L'unité 25 comprend d'autre part un certain nombre de sorties parallèles 01-0x reliées par des optocoupleurs 33 et des circuits de protection 34 respectifs à des bornes de sortie 35. Une sortie série 36 cadencée par les signaux CK et ST - ou en variante par CK' et P/S - est reliée via une liaison série 37 munie d'un optocoupleur 38 à un dispositif d'autotest et/ou à un organe d'exploitation approprié.

En variante, les sorties parallèles 01-0x peuvent être supprimées et l'unité 25 de gestion d'entrées-sorties peut comporter une seule sortie série reliée via l'optocoupleur 38 à l'entrée série d'un organe désérialiseur ; les sorties parallèles de cet organe sont alors connectées aux voies de sortie via les circuits de protection 34, cet agencement étant en quelque sorte homologue de celui de l'organe sérialiseur 20.

Une entrée 39 de l'unité 25 reçoit via un optocoupleur 40 un signal de défaut lorsqu'il se produit un défaut au niveau de l'une des sorties et que ce défaut a été détecté par l'un des circuits 34.

De plus, un afficheur 41 est relié par des conducteurs 42 à des sorties multiplexées 43 de l'unité de gestion 25.

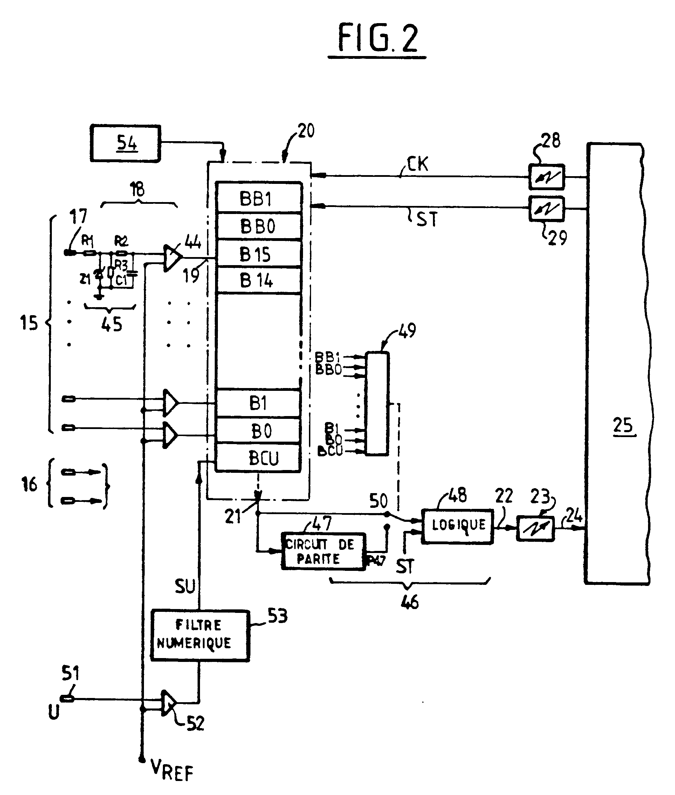

Dans le mode de réalisation de la figure 2, l'organe sérialiseur 20 comprend un registre à décalage composé de dix-neuf bascules D, à savoir :

- une bascule BCU de contrôle de la tension U des capteurs,
- seize bascules B0-B15 de données reliées aux bornes respectives d'entrée 17, et
- deux bascules BB0, BB1 de contrôle d'échange.

La bascule BCU génère un bit de valeur 0 ou 1 selon que la tension d'alimentation des capteurs est inférieure ou supérieure à un seuil de tension VREF.

Les bascules B0-B15 génèrent un bit de valeur 0 ou 1 selon que la tension appliquée à la borne respective 17 est inférieure ou supérieure au même seuil VREF. Il est avantageux que ce seuil VREF soit le même, d'une part, pour contrôler la tension U des capteurs et, d'autre part, pour acquérir les données issues de ces capteurs, puisqu'ainsi toute variation du seuil est prise en compte dans le même sens.

Les bascules BB0, BB1 sont aptes à délivrer un bit B0, B1 de valeur fixe, 0 et 1 respectivement, dans le but de contrôler l'intégrité physique de la liaison entre l'organe sérialiseur et l'unité de gestion d'entrées-sorties. Les bits B0 et B1 permettent notamment de contrôler si les liaisons à optocoupleurs 23, 23a et 28, 29 introduisent une erreur de transmission afin d'assurer en cas de défaillance une inhibition de l'échange et une signalisation de défaut ; un tel cas de défaillance peut, par exemple, être constitué par un court-circuit ou une ouverture de circuit d'un optocoupleur.

Chaque bascule de données B0-Bn est reliée à sa borne respective 17 par l'intermédiaire de l'organe de filtrage et de seuil 18 dont seul a été représenté pour simplifier celui associé à la bascule B15.

Chaque organe 18 comprend un comparateur 44 précédé d'un réseau 45 de filtrage analogique. Le réseau 45 comporte entre la borne 17 et une entrée du comparateur deux résistances série R1, R2 ; un point situé entre R2 et l'entrée du comparateur est relié à la masse via une capacité C1 ; un point intermédiaire entre R1 et R2 est relié à la masse via une résistance R3 en parallèle avec une diode Zener Z1. Une autre entrée du comparateur reçoit la tension de seuil VREF, ceci présentant l'avantage précédemment cité.

Les sorties des divers comparateurs 44 sont connectées aux entrées parallèles 19 du registre 20, tandis que la sortie série 21 du registre est reliée à un moyen 46 destiné à élaborer et adjoindre à la trame un bit de parité. Le moyen 46 comprend un organe 47 de calcul de parité pour chaque trame émise par le registre 20. L'organe 47 délivre un bit de parité P47 transmis en fin d'échange vers la liaison série 22 via une logique appropriée 48 tenant compte notamment de l'émission du signal de scrutation ST. Cette transmission en fin d'échange s'effectue au moyen d'un commutateur 50 dépendant d'une logique 49. Celle-ci reçoit sur différentes entrées les signaux de sortie des bascules BCU, B0-Bn, BB0, BB1 et commande le commutateur lorsque ces signaux indiquent la fin du glissement série ; le commutateur 50 assure ainsi en cours d'échange la liaison directe 21-48 et en fin d'échange la liaison 47-48.

De préférence, l'organe 47 comprend une porte OU exclusif à deux entrées et une bascule de type D cadencée par le signal CK et remise à zéro par le signal ST. L'entrée de données de la bascule D est connectée à la sortie de la porte OU exclusif. La sortie Q de la bascule D est reliée, d'une part, au commutateur 50 pour être reliée à la liaison série, d'autre part, à une première entrée de la porte OU exclusif, tandis que la deuxième entrée de cette porte est reliée à la sortie 21 du registre 20. On obtient ainsi de manière simple un calcul de parité à la volée.

La bascule BCU de contrôle de la tension U des capteurs est reliée à une borne d'entrée 51 à laquelle est applicable la tension U via un comparateur 52 et un filtre numérique 53. Le comparateur 52 compare la tension U au seuil VREF et le filtre 53, qui pourrait être en variante un filtre analogique, délivre un signal SU appliqué à la bascule BCU.

D'une manière avantageuse, le filtre numérique 53 est un compteur-décompteur conçu de façon à présenter :

- pour une coupure de la tension U des capteurs, une constante de temps inférieure à la constante de temps des réseaux de filtrage 45 des organes 18, et
- pour un rétablissement de la tension U des capteurs, une constante de temps supérieure à la constante de temps des réseaux 45.

De la sorte, on est assuré que le signal SU de contrôle de la tension des capteurs change d'état, d'une part, lors d'une coupure de U plus rapidement que les signaux de données et, d'autre part, lors d'une montée de U moins rapidement que les signaux de données pour permettre de charger les capacités C1 des filtres analogiques 45 des voies d'entrée.

Il convient de noter qu'un dispositif de commutation 54 est associé au registre parallèle-série 20 pour activer en fonction d'une commande de commutation la totalité ou une partie des bascules de données du registre, par exemple seize ou douze bascules dans le présent exemple On supposera par la suite que le registre 20 est sélectionné sur sa capacité basse de douze voies d'entrée, étant entendu que chaque trame de liaison série comprend alors successivement les bits : CU, B0, B1, B2,... B10, B11, BB0, BB1, P47, au lieu de CU, B0, B1, B2,... B14, B15, BB0, BB1, P47 pour un fonctionnement avec seize voies d'entrée utiles.

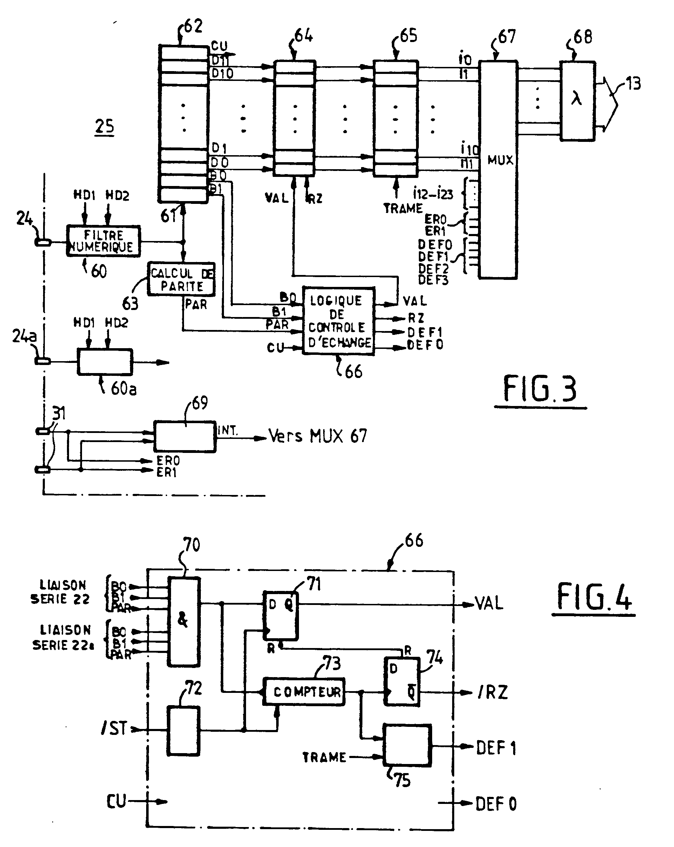

La figure 3 illustre un mode de réalisation de l'unité de gestion d'entrées-sorties 25. L'entrée série 24 de l'unité 25 est reliée via un filtre numérique de mode commun 60, d'une part, à une entrée série 61 d'un organe désérialiseur 62 présentement constitué par un registre série-parallèle, d'autre part, à un organe de vérification de parité 63 délivrant pour chaque mot transmis un bit de parité PAR représentatif d'une parité correcte ou incorrecte. Il en est de même pour l'entrée série 24a, pour laquelle on prévoit un filtre numérique de mode commun 60a, ainsi qu'un registre désérialiseur et d'autres organes identiques à ceux qui vont à présent être décrits en interdépendance avec le registre 62.

De préférence, l'organe 63 comprend une porte OU exclusif interconnectée avec une bascule D de la manière précédemment décrite pour l'organe 47. Une entrée de la porte OU exclusif est ainsi reliée à l'entrée 24, une autre entrée de cette porte est reliée à la sortie Q de la bascule D ; la sortie Q est d'autre part reliée à une logique de contrôle d'échange qui sera décrite plus loin.

Chaque filtre numérique 60, 60a reçoit des signaux d'horloge HD1, HD2 provenant du système d'horloge 26 et sert à éliminer les perturbations de mode commun affectant la liaison série 22, 22a.

Le registre 62 présente des sorties parallèles B1, B0, D0-D11 et CU. Les sorties D0-D11 du registre 62 sont couplées à un registre 64 de validation d'échange tandis que les sorties B1, B0 et CU sont couplées à une logique de contrôle d'échange 66.

Les sortiés du registre 64 sont couplées aux entrées d'un registre-verrou 65. La logique de contrôle d'échange 66 reçoit, outre les bits B0 et B1 de contrôle d'intégrité de l'échange, le bit PAR de contrôle de parité et délivre un signal VAL de validation de l'échange lorsqu'elle a vérifié que les bits B0, B1, PAR des deux liaisons série 22 et 22a ont tous la valeur correcte. La logique 66 délivre un signal de remise à zéro RZ et un signal de défaut DEF 1 si l'un des bits B0, B1, PAR garde une valeur incorrecte pendant un nombré d'échanges prédéterminé, ainsi qu'un signal de défaut DEF 0 si le bit CU témoigne d'une trop faible tension des capteurs.

Le signal VAL est accouplable au registre 64 et, selon son état, établit ou empêche le chargement du registre. En cas de défaut, le registre 64 conserve les données de la trame précédente ; si le défaut persiste, il garde les anciennes données pendant n trames et il est remis à zéro à la n + 1 ème trame (n = 3 par exemple) et ceci au moyen d'un circuit de comptage inclus dans la logique 66 et décrit plus loin en regard de la figure 4.

Le registre-verrou 65 commande douze lignes I0-I11 reliées via un multiplexeur 67 à sortie octale à un tampon 68 tri-état d'accés au bus 13 à huit bits. Le multiplexeur 67 reçoit de même douze lignes I12-I23 de sortie d'un registre-verrou homologue non représenté et correspondant à la liaison série 22a. Le multiplexeur 67 multiplexe divers autres signaux, notamment des signaux ER0, ER1 d'entrée rapide provenant le cas échéant des entrées événementielles 16 et des signaux DEF 0 de défaut de tension capteur, DEF 1 de défaut d'échange, DEF 2 de défaut de sortie et DEF 3 de défaut de tension pour l'automate. Une logique 69 reçoit également les signaux ER0, ER1 pour générer un signal d'interruption INT applicable au multiplexeur 67.

Comme le montre plus en détail la figure 4, la logique 66 de contrôle d'échange comprend une logique ET 70 qui reçoit les bits B0, B1 et PAR correspondant aux deux liaisons série 22 et 22a. Une sortie de la logique 70 est reliée à l'entrée d'inhibition d'un compteur de défauts 73 et à l'entrée de données d'une bascule D 71 dont la sortie Q génère le signal VAL. L'entrée d'horloge de la bascule 71 et l'entrée du compteur de défauts 73 reçoivent le signal /ST via une bascule 72 dite de "première trame".

La bascule 72 de première trame permet ainsi de bloquer la bascule 71 et d'éviter d'incrémenter le compteur 73 lorsque survient le premier signal ST ; en effet, celui-ci sert à charger les données dans le registre sérialiseur 20, (20a) ; et ce n'est qu'au deuxième signal ST que l'on pourra prendre en compte les données dans le registre de validation 64.

Le compteur 73 comprend une sortie reliée, d'une part, à l'entrée d'horloge d'une bascule D 74 délivrant le signal de remise à zéro RZ du registre 64, d'autre part, à une logique 75 délivrant un signal de défaut DEF 1 lorsque le compteur a compté quatre erreurs d'échange consécutives. La logique 75 générant le signal DEF 1 est verrouillable de même que le registre 65 par un signal TRAME.

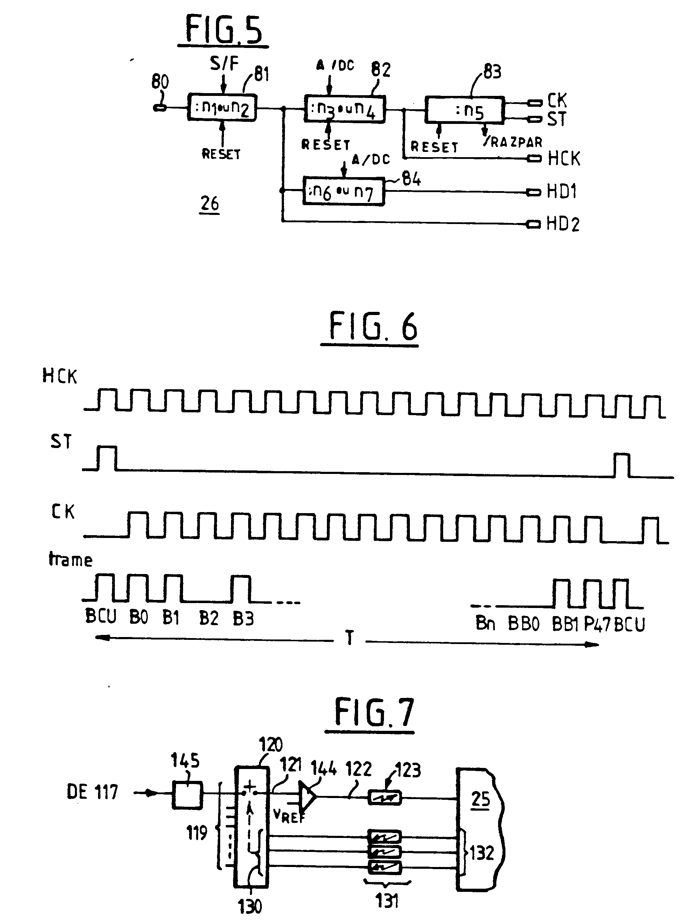

La figure 5 montre le système d'horloge 26 de l'unité de gestion 25 d'entrées-sorties. Ce système présente une borne d'entrée 80 reliée à une horloge proprement dite dont la fréquence est par exemple de 3,7 à 4 MHz, puis trois diviseurs de fréquence successifs 81, 82, 83 et un diviseur de fréquence 84 en parallèle à 82.

Le diviseur 81 délivre aux diviseurs 82, 84 un signal HD1 divisé par n1 ou n2 > n1 selon l'état d'un signal S/F dont l'état est choisi par exemple en fonction des caractéristiques de blocage de l'optocoupleur 23 pour permettre de ralentir légèrement la trame.

Le diviseur 82 génère un signal divisé par n3 ou n4 > n3 selon l'état d'un signal A/DC lorsqu'une transmission beaucoup plus lente est souhaitée, ceci pouvant être le cas pour des entrées en courant alternatif. Le diviseur 82 délivre un signal HCK retransmis au diviseur 83. Ce dernier génère le signal discontinu d'horloge CK et le signal de scrutation ST, celui-ci étant obtenu par division de la fréquence de HCK par n5. Le diviseur 84 reçoit le signal HD1 et émet un signal HD2 divisé par n6 ou par n7 > n6, ce qui permet un fort ralentissement de HD2 en fonction de l'état du signal A/DC.

La figure 6 montre les chronogrammes des signaux respectifs HCK, CK et ST ainsi que la longueur T d'une trame. A titre d'exemple, cette longueur peut être de 2,5 ms pour S/F = 0 et A/DC = 0.

Le système d'horloge 26, dont il convient de souligner qu'il est propre à l'unité de gestion 25, cadence la liaison série 22 et sert à gérer le multiplexage de la visualisation. Il cadence aussi la liaison série 37 issue de l'unité de gestion. HD1 et HD2 servent à cadencer les filtres numériques 60, 60a. HCK permet de générer CK et ST et permet donc de réaliser les trames d'entrée et de sortie de l'unité de gestion 25.

Par ailleurs, on associe au circuit de gestion d'entrées-sorties des dispositions matérielles et logicielles d'autotest qui n'ont pas été représentées.

Les filtres analogiques d'entrée 45 peuvent être remplacés par des filtres numériques.

Dans un autre mode de réalisation représenté figure 7, l'organe sérialiseur est constitué par un multiplexeur analogique 120 géré par adressage. Le multiplexeur présente des entrées 119 reliées aux bornes d'entrée 117 via des filtres 145 et une sortie multiplexée 121 reliée via un comparateur 144 auquel est appliqué le seuil VREF à une liaison série 122 dotée d'un optocoupleur 123 et connectée à l'unité de gestion. Le multiplexeur présente également des entrées 130 d'adressage reliées par des lignes munies chacune d'un optocoupleur 131 à des sorties respectives d'adressage 132 de l'unité de gestion.

**Revendications**

1. Circuit de gestion d'entrées pour un système de commande de processus tel qu'un automate programmable, ce système comprenant :
   - une unité centrale (11) munie d'un processeur et de mémoires, notamment d'une mémoire-image d'entrées-sorties (11a),
   - un bus de données (13) et un bus de signaux de service (14) assurant la liaison entre le circuit de gestion (12) et l'unité centrale,

   le circuit de gestion comportant une pluralité de voies parallèles d'entrée (15) susceptibles d'être reliées à des capteurs respectifs et dont l'état est cycliquement scruté par l'unité centrale,
   caractérisé en ce qu'il comporte :
   - un organe sérialiseur (20) muni d'entrées parallèles (19) reliées aux voies respectives d'entrée (15) par l'intermédiaire d'organes respectifs de filtrage et de seuil (18), et muni d'une sortie série (21) susceptible de transmettre des mots comprenant des bits successifs correspondant aux signaux appliqués aux voies d'entrée,
   - une unité de gestion d'entrées (25) comprenant un organe désérialiseur dont l'entrée série est reliée à la sortie du filtre (60) et dont la sortie parallèle est connectée au bus de données (13).
   - une liaison série (22) reliant ladite sortie série à l'unité de gestion d'entrées (25) accouplable au processeur de l'unité centrale pour des échanges avec la mémoire-image d'entrées-sorties,
   - un organe d'isolement tel qu'un optocoupleur(23), interposé sur la liaison série pour assurer la transmission isolée de signaux d'entrée entre l'organe sérialiseur et l'unité de gestion d'entrées, et
   - un filtre (60) disposé sur la liaison série en aval de l'optocoupleur.

2. Circuit de gestion d'entrées selon la revendication 1,
   caractérisé par le fait que l'organe sérialiseur (20) est un registre parallèle-série auquel est applicable un signal d'horloge (CK) pour cadencer le glissement série et présentant à cet effet une entrée d'horloge reliée via une liaison munie d'un optocoupleur (28) à un système d'horloge (26) propre à l'unité de gestion d'entrées (25), ce système d'horloge étant autonome par rapport au système d'horloge de l'unité centrale (11) du système de commande de processus.

3. Circuit de gestion d'entrées selon la revendication 2,
   caractérisé par le fait qu'il comporte plusieurs registres parallèle-série (20, 20a...) reliés par autant d'optocoupleurs respectifs de liaison sé-

6

rie (23, 23a...) et par un seul optocoupleur d'horloge (28) à l'unité de gestion (25).

4. Circuit de gestion d'entrées selon l'une des revendications 2 et 3,
caractérisé par le fait que le registre parallèle-série (20) présente une entrée de scrutation à laquelle est applicable via une liaison munie d'un optocoupleur (29) un signal cyclique de scrutation (ST) généré par le système d'horloge (26) de l'unité de gestion d'entrées (25).

5. Circuit de gestion d'entrées selon la revendication 4,
caractérisé par le fait qu'il comporte plusieurs registres parallèle-série (20, 20a...) reliés par autant d'optocoupleurs respectifs (23, 23a,...) de liaison série et par un seul optocoupleur de scrutation (29) à l'unité de gestion (25).

6. Circuit de gestion d'entrées selon la revendication 1,
caractérisé par le fait que l'organe sérialiseur est un multiplexeur analogique (120) présentant plusieurs entrées d'adressage (130) reliées via des optocoupleurs respectifs (131) à des sorties d'adressage (132) de l'unité de gestion d'entrées (25).

7. Circuit de gestion d'entrées selon l'une des revendications 1 à 6,
caractérisé par le fait que chaque mot délivré par l'organe sérialiseur comprend au moins un bit de contrôle de valeur fixe pour le contrôle de l'intégrité de la liaison série (22),
- l'organe sérialiseur (20) comprenant un moyen d'élaboration du bit de contrôle et d'apposition de celui-ci au mot,
- l'unité de gestion d'entrées (25) comportant un organe désérialiseur (62) muni d'une entrée série (61) et d'au moins une sortie pour le bit de contrôle, et
- une logique (66) traitant le bit de contrôle pour délivrer un signal de validation d'échange (VAL) lorsque la valeur du bit de contrôle reçu par l'organe désérialiseur est correcte.

8. Circuit de gestion d'entrées selon la revendication 7,
caractérisé par le fait que le message délivré par l'organe sérialiseur est un mot comprenant :
- un bit de contrôle (B1) de valeur 1,
- un bit de contrôle (B0) de valeur 0,
- un bit de parité (P47) pour les données du mot,
- l'organe sérialiseur (20) présentant un moyen d'élaboration (46) du bit de parité et d'apposition de celui-ci au mot,
- l'organe désérialiseur (62) étant muni de sorties respectives pour les bits de contrôle (B1) et (B0),
- la logique traitant les bits de contrôle (B1) et (B0) et un bit de parité (PAR) calculé à partir du bit de parité transmis (P47) pour délivrer le signal de validation d'échange (VAL) lorsque la valeur des bits (B1, B0, PAR) est correcte.

9. Circuit de gestion d'entrées selon la revendication 8,
caractérisé par le fait que :
- le moyen (46) d'élaboration du bit de parité comprend une porte OU exclusif dont la sortie est connectée à l'entrée d'une bascule (D), la sortie (Q) de la bascule (D) étant connectable à la liaison série (22) et reliée à une première entrée de la porte OU exclusif, tandis qu'une deuxième entrée de cette porte est reliée à la sortie série (21) du registre sérialiseur (20),
- le bit de parité (PAR) est calculé par un organe (63) comprenant une deuxième porte OU exclusif connectée à l'entrée d'une deuxième bascule (D), la sortie (Q) de la deuxième bascule (D) étant connectée à la logique (66) de contrôle d'échange et à une premiére entrée de la deuxième porte OU exclusif, tandis qu'une deuxième entrée de cette porte est reliée à l'entrée série (61) de l'organe désérialiseur (62).

10. Circuit de gestion d'entrées selon l'une des revendications 7 à 9,
caractérisé par le fait que l'unité de gestion d'entrées (25) comprend un registre parallèle de confirmation (64) et un registre parallèle de verrouillage (65) accouplable au bus de données (13), le registre de confirmation (64) étant muni d'une entrée pour le signal de validation (VAL) et étant susceptible d'être chargé par les sorties parallèles du registre désérialiseur (62) et d'être déchargé vers le registre de verrouillage (65) quand ledit signal prend sa valeur de validation.

11. Circuit de gestion d'entrées selon l'une des revendications 7 à 10,
caractérisé par le fait que la logique de contrôle d'échange (66) comprend un compteur de défauts (73) et des éléments logiques (71, 74, 75) pour générer le signal de validation (VAL), un signal de défaut d'échange (DEF 1) et un signal de remise à zéro (RZ) du registre de confirmation (64) et que, lorsque l'état du signal (VAL) est significatif d'un défaut d'échange, le compteur s'incrémente jusqu'à atteindre un nombre de défauts prédéterminé pour lequel sont générés les signaux (RZ) et (DEF 1).

12. Circuit de gestion d'entrées selon l'une des revendications 7 à 11,
caractérisé par le fait que chaque mot délivré par l'organe sérialiseur (20) comprend un bit de contrôle (CU) de la tension des capteurs :
- l'organe sérialiseur (20) présentant un moyen (BCU) d'élaboration du bit de contrôle de tension et d'apposition de celui-ci en tête de trame,
- l'organe désérialiseur (62) étant muni d'une sortie pour le bit de contrôle de tension (CU),
- la logique (66) traitant le bit de contrôle de tension pour émettre un signal de défaut de tension (DEF 0) lorsque ladite tension est inférieure à un seuil prédéterminé.

13. Circuit de gestion d'entrées selon la revendication 12,
caractérisé par le fait que le moyen (BCU) d'élaboration du bit de contrôle de tension est relié à une borne d'entrée (51) par l'intermédiaire d'un comparateur (52) en série avec un filtre (53), le comparateur comparant la tension (U) des capteurs appliquée à la borne d'entrée à une tension de référence constituée par le seuil (VREF) appliqué aux organes de filtrage et de seuil (18).

14. Circuit de gestion d'entrées selon la revendication 13,
caractérisé par le fait que le filtre (53) est conçu de façon à présenter
- pour une coupure de la tension (U) des capteurs, une constante de temps inférieure à la constante de temps des organes de filtrage et de seuil (18),
- pour un rétablissement de la tension (U) des capteurs, une constante de temps supérieure à la constante de temps des organes de filtrage et de seuil (18).

15. Circuit de gestion d'entrées selon l'une des revendications 7 à 14,
caractérisé par le fait que le filtre (60) est un filtre numérique disposé dans l'unité de gestion d'entrées (25) entre l'entrée série (24) de celle-ci et l'organe désérialiseur (62), ledit filtre étant cadencé par au moins un signal d'horloge (HD1, HD2) généré par le système d'horloge (26) de l'unité de gestion (25).

16. Circuit de gestion d'entrées selon l'une des revendications 1 à 15,
caractérisé par le fait qu'un signal de commutation (S/F) est applicable au système d'horloge (26) pour que celui-ci délivre au moins un signal d'horloge (CK, ST) légèrement ralenti pour l'un des états dudit signal.

17. Circuit de gestion d'entrées selon l'une des revendications 1 à 16,
caractérisé par le fait qu'un signal de commutation (A/DC) est applicable au système d'horloge (26) pour que celui-ci délivre au moins un signal d'horloge (CK, ST) fortement ralenti pour l'un des états dudit signal.

18. Circuit de gestion d'entrées-sorties selon l'une des revendications 1 à 17,
caractérisé par le fait que l'unité de gestion d'entrées (25) gère également les sorties du système de commande de processus et comprend des registres de sortie accouplables, d'une part, au bus de données (13) et, d'autre part, à des sorties de données parallèles (32) et à un registre sérialiseur relié à une sortie de données série (36).

19. Circuit de gestion d'entrées-sorties selon la revendication 18,
caractérisé par le fait que la sortie de données série (36) du registre sérialiseur est reliée via une liaison série munie d'un optocoupleur (38) à un organe désérialiseur dont les sorties parallèles sont elles-mêmes connectées à des bornes respectives de sortie (35).

20. Système de commande de processus tel qu'un automate programmable,
caractérisé par le fait qu'il comprend un circuit ou plusieurs circuits de gestion d'entrées (12) selon l'une des revendications 1 à 19.

**Claims**

1. An input management circuit for a process control system such as a programmable automaton, this system including :
- a central unit (11) including a processor and memories, particularly an input-output image memory (11a),
- a data bus (13) and a service signal bus (14) providing the connection between the management circuit (18) and the central unit ;

the management circuit including a plurality of parallel input channels (15) able to be connected to respective sensors, and whose state is cyclically scrutinized by the central unit,
characterized in that it includes :
- a serializer means (20) with parallel inputs (19) connected to the respective input channels (15) by respective filtering and threshold members (18) and having a series output (21) able to transmit words including successive bits corresponding to the signals applied to the input channels, the input management unit (25) comprising a deserializing member whose series input is connected to the output of the filter (60) and whose parallel output is connected to the data bus (13),
- a series connection (22) connecting said series output to the input management unit (25) couplable to the processor of the central unit for exchanges with the input-output image memory,
- an isolating member such as an optocoupler (23), interposed in the series connection for ensuring isolated transmission of input signals between the serializing means and the input management unit, and
- a filter (60) disposed in the series connection downstream of the optocoupler.

2. The input management circuit as claimed in claim 1,
characterized in that said serializing means (20) is a parallel-series register to which a clock signal (CK) is applied for timing the series sliding and having for this a clock input connected via a connection with an optocoupler (28) to a clock system (26) proper to the input management unit (25), said clock system being independent of the clock system of the central unit (11) of the process control system.

3. The input management circuit as claimed in claim 2,
characterized in that it includes several parallel-series registers (20, 20a ...) connected by as many respective series connection optocouplers (23, 23a ...) and by a single clock optocoupler (28) to the management unit (25).

4. The input management circuit as claimed in one of claims 2 and 3,
characterized in that the parallel-series register (20) has a scrutinization input to which is applied, via a connection with an optocoupler (29), a cyclic scrutinization signal (ST) generated by the clock system (26) of the input management unit (25).

5. The input management circuit as claimed in claim 4,
characterized in that it includes several parallel-series registers (20, 20a ...) connected by as many respective series connection optocouplers (23, 23a ...) and by a single scrutinization optocoupler (29) to the management unit (25).

6. The input management circuit as claimed in claim 1,
characterized in that the serializing means is an analog multiplexer (120) having several addressing inputs (130) connected via respective optocouplers (131) to addressing outputs (132) of the input management unit (25).

7. The input management circuit as claimed in one of claims 1 to 6,
characterized in that each word delivered by the serializing means includes at least one control bit of fixed value for checking the integrity of the series connection (22),
- the serialising means (20) including means for elaborating the control bit and affixing it to the word,
- the input management unit (25) including a deserializing means (62) with series input (61) and at least one output for the control bit, and
- a logic (66) processing the control bit for delivering an exchange validation signal (VAL) when the value of the control bit received by the deserializing means is correct.

8. The input management circuit as claimed in claim 7,
characterized in that the message delivered by the serializing means is a word including :
- a control bit (B1) of value 1,
- a control bit (B0) of value 0,
- a parity bit (P47) for the word data,
  - the serializing means (20) having a means (46) for elaborating the parity bit and affixing it to the word,
  - the deserializing means (62) being provided with respective outputs for the control bits (B1) and (B0),
  - the logic processing the control bits (B1) and (B0) and a parity bit (PAR) calculated from the transmitted parity bit (P47) for delivering the exchange validation signal (VAL) when the value of the bits (B1, B0, PAR) is correct.

9. The input management circuit as claimed in claim 8,
characterized in that :
- the means (46) for elaborating the parity bit include an exclusive OR gate whose output is connected to the input of a flip flop (D) the output (Q) of this flip flop (D) being connectable to the series connection (22) and connected to a first input of the exclusive OR gate, whereas a second input of this gate is connected to the series output (21) of the serializing register (20),
- the parity bit (PAR) is calculated by a means (63) including a second exclusive OR gate connected to the input of a second flip flop (D), the output (Q) of this second flip flop (D) being connected to the exchange control logic (66) and to a first input of the second exclusive OR gate, whereas a second input of this gate is connected to the series input (61) of the deserializing means (62).

10. The input management circuit as claimed in one of claims 7 to 9,
characterized in that the input management unit (25) includes a parallel confirmation register (64) and a parallel latching register (65) couplable to the data bus (13), the confirmation register (64) being provided with an input for the validation signal (VAL) and being loadable by the parallel outputs of the deserializing register (62) and unloaded towards the latching register (65) when said signal assumes its validation value.

11. The input management circuit as claimed in one of claims 7 to 10,
characterized in that said exchange control logic (66) includes a fault counter (73) and logic elements (71, 74, 75) for generating the validation signal (VAL), an exchange fault signal (DEF1) and a signal (RZ) for resetting the confirmation register (64) and, when the state of said signal (VAL) is significant of an exchange fault, the counter increments until it reaches a predetermined number of faults for which the reset (RZ) and exchange fault (DEF1) signals are generated.

12. The input management circuit as claimed in one of claims 7 to 11,
characterized in that each word delivered by the serializing means (20) includes a bit (CU) for checking the voltage of the sensors :
- the serializing means (20) having a means (BCU) for elaborating the voltage control bit and fixing it at the head of the frame,
- the deserializing means (62) being provided with an output for the voltage control bit (CU),
- the logic (66) processing the voltage control bit for delivering a voltage fault signal (DEF0) when said voltage is less than a predetermined threshold.

13. The input management circuit as claimed in claim 12,
characterized in that said means (BCU) for elaborating the voltage control bit is connected to an input terminal (51) through a comparator (52) in series with a filter (53), the comparator comparing the voltage (U) of the sensors applied to the input terminal with a reference voltage formed by the threshold (VREF) applied to the filtering and threshold members (18).

14. The input management circuit as claimed in claim 13,
characterized in that the filter (53) is designed so as to have :
- for a cut off of the voltage (U) of the sensors, a time constant less than the time constant of the filtering and threshold members (18),
- for reestablishing the voltage (U) of the sensors, a time constant greater than the time constant of the filtering and threshold members (18).

15. The input management circuit as claimed in one of claims 7 to 14,
characterized in that said filter (60) is a digital filter disposed in the input management unit (25) between the series input (24) thereof and the deserializing means (62), said filter being timed by at least one clock signal (HD1, HD2) generated by the clock system (26) of the management unit (25).

16. The input management circuit as claimed in one of claims 1 to 15,
characterized in that a switching signal (S/F) is applicable to the clock system (26) so that it delivers at least one clock signal (CK, ST) slightly slowed down for one of the states of said signal.

17. The input management circuit as claimed in one of claims 1 to 16,

characterized in that a switching signal (A/DC) is applicable to the clock system (26) for it to deliver at least one clock signal (CK, ST) considerably slowed down for one of the states of said signal.

18. The input-output management circuit as claimed in one of claims 1 to 17, characterized in that said input management unit (25) also controls the output of the process control system and includes output registers couplable both to the data bus (13) and to parallel data outputs (32) and to a serializing register connected to a series data output (36).

19. The input-output management circuit as claimed in claim 18, characterized in that said series data output (36) of the serializing register is connected via a series connection having an optocoupler (38) to deserializing means whose parallel outputs are themselves connected to respective output terminals (35).

20. A process control system such as a programmable automaton, characterized in that it includes one or more input management circuits (12) as claimed in one of claims 1 to 19.

**Patentansprüche**

1. Eingaben-Verwaltungskreis für ein Prozeßsteuersystem wie einen programmierbaren Automaten, wobei dieses System aufweist:
    - eine Zentraleinheit (11) mit einem Prozessor und Speichern, insbesondere einem Eingangs-Ausgangs-Bildspeicher (11a),
    - einen Datenbus (13) und einen Dienstsignalebus (14), die die Verbindung zwischen dem Verwaltungskreis (12) und der Zentraleinheit bewirken,
    wobei der Verwaltungskreis eine Vielzahl von parallelen Eingangskanälen (15) aufweist, die je an Meßfühler angeschlossen werden können und deren Zustand zyklisch von der Zentraleinheit geprüft wird,
    dadurch gekennzeichnet, daß er aufweist:
    - einen Parallel-Serienwandler (20) mit parallelen Eingängen (19), die je mit den Eingangskanälen (15) über Filter- und Schwellenorgane (18) verbunden sind, und mit einem Serienausgang (21), der Wörter übertragen kann, die aufeinanderfolgende Bits enthalten, welche den an die Eingangskanälen angelegten Signalen entsprechen,

    - eine Eingaben-Verwaltungseinheit (25), die einen Serien-Parallel-Wandler aufweist, dessen Serieneingang mit dem Ausgang des Filters (60), und dessen Parallelausgang mit dem Datenbus (13) verbunden ist,
    - eine Serienverbindung (22), die diesen Serienausgang mit der Eingaben-Verwaltungseinheit (25) verbindet, die für den Datenaustausch mit dem Eingangs-Ausgangs-Bildspeicher an den Prozessor der Zentraleinheit koppelbar ist,
    - ein Isolierorgan wie einen Lichtkoppler (23), der auf die Serienverbindung zwischengeschaltet ist, um die isolierte Übertragung von Eingangssignalen zwischen dem Parallel-Serien-Wandler und der Eingaben-Verwaltungseinheit zu bewirken, und
    - einen Filter (60), der auf der Serienverbindung hinter dem Lichtkoppler angeordnet ist.

2. Eingaben-Verwaltrnngskreis nach Anspruch 1, dadurch gekennzeichnet, daß der Parallel-Serien-Wandler (20) ein Parallel-Serien-Register ist, an das ein Taktsignal (CK) anlegbar ist, um den Serien-Schift zu takten, und das zu diesem Zweck einen Takteingang aufweist, der über eine mit einem Lichtkoppler (28) versehene Verbindung mit einem zur Eingaben-Verwaltungseinheit (25) gehörenden Taktgebersystem (26) verbunden ist, wobei dieses Taktgebersystem in Bezug auf das Taktgebersystem der Zentraleinheit (11) des Prozeßsteuersystems autonom ist.

3. Eingaben-Verwaltungskreis nach Anspruch 2, dadurch gekennzeichnet, daß er mehrere Parallel-Serien-Register (20, 20a, ...) aufweist, die durch ebensoviele Serienverbindungs-Lichtkoppler (23, 23a, ...) und durch einen einzigen Takt-Lichtkoppler (28) mit der Verwaltungseinheit (25) verbunden sind.

4. Eingaben-Verwaltungskreis nach einem der Ansprüche 2 und 3, dadurch gekennzeichnet, daß das Parallel-Serien-Register (20) einen Prüfeingang aufweist, an den über eine mit einem Lichtkoppler (29) versehene Verbindung ein zyklisches Prüfsignal (ST) angelegt werden kann, das vom Taktgebersystem (26) der Eingaben-Verwaltungseinheit (25) erzeugt wird.

5. Eingaben-Verwaltungskreis nach Anspruch 4, dadurch gekennzeichnet, daß er mehrere Parallel-Serien-Register (20, 20a, ...) aufweist, die durch ebensoviele Serienverbindungs-Lichtkoppler (23, 23a,...) und durch einen einzigen Prüf-Lichtkoppler (29) mit der Verwaltungseinheit (25) verbunden sind.

6. Eingaben-Verwaltungskreis nach Anspruch 1, dadurch gekennzeichnet, daß der Parallel-Serien-Wandler ein analoger Multiplexer (120) ist, der mehrere Adressiereingänge (130) aufweist, die über Lichtkoppler (131) mit Adressierausgängen (132) der Eingaben-Verwaltungseinheit (25) verbunden sind.

7. Eingaben-Verwaltungskreis nach einem der Ansprüche 1 bis 6, dadurch gekennzeichnet, daß jedes vom Parallel-Serien-Wandler gelieferte Wort mindestens ein Kontrollbit festen Werts zur Kontrolle der Unversehrtheit der Serienverbindung (22) aufweist,
   - wobei der Parallel-Serienwandler (20) ein Mittel zur Erarbeitung des Kontrollbits und zur Hinzufügung dieses Bits zum Wort aufweist,
   - wobei die Eingaben-Verwaltungseinheit (25) einen Serien-Parallel-Wandler (62) mit einem Serieneingang (61) und mindestens einem Ausgang für das Kontrollbit aufweist, und
   - wobei eine Logik (66) das Kontrollbit verarbeitet, um ein Austausch-Freigabesignal (VAL) zu liefern, wenn der Wert des vom Serien-Parallel-Wandler erhaltenen Kontrollbits korrekt ist.

8. Eingaben-Verwaltungskreis nach Anspruch 7, dadurch gekennzeichnet, daß die vom Parallel-Serien-Wandler gelieferte Nachricht ein Wort ist, das enthält:
   - ein Kontrollbit (B1) des Werts 1,
   - ein Kontrollbit (B0) des Werts 0,
   - ein Paritätsbit (P47) für die Daten des Worts,
      - wobei der Parallel-Serien-Wandler (20) ein Mittel zur Erarbeitung (46) des Paritätsbits und zum Hinzufügen dieses Bits an das Wort aufweist,
      - wobei der Serien-Parallel-Wandler (62) mit Ausgängen für die Kontrollbits (B1) bzw. (B0) ausgestattet ist,
      - wobei die Logik die Kontrollbits (B1) und (B0) und ein ausgehend vom übertragenen Paritätsbit (P47) berechnetes Paritätsbit (PAR) verarbeitet, um das Austausch-Freigabesignal (VAL) zu liefern, wenn der Wert der Bits (B1, B0, PAR) korrekt ist.

9. Eingaben-Verwaltungskreis nach Anspruch 8, dadurch gekennzeichnet, daß

   - das Mittel (46) zur Erarbeitung des Paritätsbits ein Exklusiv-ODER Tor aufweist, dessen Ausgang mit dem Eingang einer Kippstufe (D) verbunden ist, wobei der Ausgang (Q) der Kippstufe (D) an die Serienverbindung (22) gekoppelt werden kann und mit einem ersten Eingang des Exklusiv-ODER Tors verbunden ist, während ein zweiter Eingang dieses Tors mit dem Serienausgang (21) des Parallel-Serien-Wandlers (20) verbunden ist,
   - das Paritätsbit (PAR) von einem Organ (63) errechnet wird, das ein zweites Exklusiv-ODER Tor aufweist, das mit dem Eingang einer zweiten Kippstufe (D) verbunden ist, wobei der Ausgang (Q) der zweiten Kippstufe (D) mit der Austauschkontrollogik (66) und mit einem ersten Eingang des zweiten Exklusiv-ODER Tors verbunden ist, während ein zweiter Eingang dieses Tors mit dem Serieneingang (61) des Serien-Parallel-Wandlers (62) verbunden ist.

10. Eingaben-Verwaltungskreis nach einem der Ansprüche 7 bis 9, dadurch gekennzeichnet, daß die Eingaben-Verwaltungseinheit (25) ein Bestätigungs-Parallelregister (64) und ein Verriegelungs-Parallelregister (65) aufweist, das an den Datenbus (13) gekoppelt werden kann, wobei das Bestätigungsregister (64) mit einem Eingang für das Freigabesignal (VAL) ausgestattet ist und von den Parallelausgängen des Serien-Parallel-Wandlers (62) geladen und zum Verriegelungsregister (65) entladen werden kann, wenn dieses Signal seinen Freigabewert annimmt.

11. Eingaben-Verwaltungskreis nach einem der Ansprüche 7 bis 10, dadurch gekennzeichnet, daß die Austauschkontrollogik (66) einen Fehlerzähler (73) und logische Elemente (71, 74, 75) aufweist, um das Freigabesignal (VAL), ein Austauschfehlersignal (DEF 1) und ein Nullrücksetzungssignal (RZ) des Bestätigungsregisters (64) zu erzeugen, und daß, wenn der Zustand des Signals (VAL) für einen Austauschfehler signifikant ist, der Zähler sich inkrementiert, bis er eine vorbestimmte Anzahl von Fehlern erreicht, für die die Signale (RZ) und (DEF 1) erzeugt werden.

12. Eingaben-Verwaltungskreis nach einem der Ansprüche 7 bis 11, dadurch gekennzeichnet, daß jedes vom Parallel-Serien-Wandler (20) gelieferte Wort ein Kontrollbit (CU) der Spannung der Meßfühler aufweist:
   - wobei der Parallel-Serien-Wandler (20) ein Mittel (BCU) zur Erzeugung des Spannungs-Kontrollbits und zum Hinzufügen dieses Bits an den Anfang der Bitfolge aufweist,

- wobei der Serien-Parallel-Wandler (62) einen Ausgang für das Spannungs-Kontrollbit (CU) aufweist,
- wobei die Logik (66) das Spannungs-Kontrollbit verarbeitet, um ein Spannungsfehlersignal (DEF 0) auszugeben, wenn diese Spannung unter einer vorbestimmten Schwelle liegt.

13. Eingaben-Verwaltungskreis nach Anspruch 12, dadurch gekennzeichnet, daß das Mittel (BCU) zur Erzeugung des Spannungskontrollbits mit einer Eingangsklemme (51) über einen Komparator (52) in Serie mit einem Filter (53) verbunden ist, wobei der Komparator die Spannung (U) der Meßfühler, die auf die Eingangsklemme angelegt ist, mit einer Bezugsspannung vergleicht, die aus der Schwellenspannung (VREF) besteht, die an die Filter- und Schwellenorgane (18) angelegt ist.

14. Eingaben-Verwaltungskreis nach Anspruch 13, dadurch gekennzeichnet, daß das Filter (53) so gestaltet ist, daß es aufweist:
- für eine Unterbrechung der Spannung (U) der Meßfühler, eine Zeitkonstante geringer als die Zeitkonstante der Filter- und Schwellenorgane (18),
- für eine Wiedereinschaltung der Spannung (U) der Meßfühler, eine Zeitkonstante höher als die Zeitkonstante der Filter- und Schwellenorgane (18).

15. Eingaben-Verwaltungskreis nach einem der Ansprüche 7 bis 14, dadurch gekennzeichnet, daß das Filter (60) ein numerisches Filter ist, das in der Eingaben-Verwaltungseinheit (25) zwischen deren Serieneingang (24) und dem Serien-Parallel-Wandler (62) angeordnet ist, wobei dieses Filter von mindestens einem Taktsignal (HD1, HD2) getaktet wird, das vom Taktgebersystem (26) der Verwaltungseinheit (25) erzeugt wird.

16. Eingaben-Verwaltungskreis nach einem der Ansprüche 1 bis 15, dadurch gekennzeichnet, daß ein Schaltsignal (S/F) an das Taktgebersystem (26) angelegt werden kann, damit dieses mindestens ein Taktsignal (CK, ST) erzeugt, das für einen der Zustände dieses Signals leicht verlangsamt ist.

17. Eingaben-Verwaltungskreis nach einem der Ansprüche 1 bis 16, dadurch gekennzeichnet, daß ein Schaltsignal (A/DC) an das Taktgebersystem (26) angelegt werden kann, damit dieses mindestens ein Taktsignal (CK, ST) liefert, das für einen der Zustände dieses Signals stark verlangsamt ist.

18. Eingaben-Ausgaben-Verwaltungskreis nach einem der Ansprüche 1 bis 17, dadurch gekennzeichnet, daß die Eingaben-Verwaltungseinheit (25) ebenfalls die Ausgaben des Prozeßsteuersystems verwaltet und Ausgangsregister aufweist, die einerseits an den Datenbus (13) und andererseits an parallele Datenausgänge (32) und an ein mit einem Serien-Datenausgang (36) verbundenes Parallel-Serien-Register gekoppelt werden können.

19. Eingaben-Ausgaben-Verwaltungskreis nach Anspruch 18, dadurch gekennzeichnet, daß der Serien-Datenausgang (36) des Parallel-Serien-Registers über eine mit einem Lichtkoppler (38) versehene Serienverbindung mit einem Serien-Parallel-Wandler verbunden ist, dessen parallele Ausgänge selbst an jeweilige Ausgangsklemmen (35) angeschlossen sind.

20. Prozeßsteuersystem wie z.B. ein programmierbarer Automat, dadurch gekennzeichnet, daß es einen oder mehrere Eingaben-Verwaltungskreise (12) nach einem der Ansprüche 1 bis 19 aufweist.

# FIG.1

EP 0 272 172 B1

# FIG.2

15

FIG.3

FIG.4

16

## FIG.5

## FIG. 6

## FIG.7